# EUROPEAN PATENT SPECIFICATION

(11) **EP 3 760 477 B1**
(45) Date of publication and mention of the grant of the patent: **22.06.2022**
(21) Application number: 19847268.0
(22) Date of filing: 14.01.2019
(51) Int. Cl.: B60N 2/64, B60N 2/68, B60N 2/80, B60N 2/70, B60N 2/72, B60N 2/809, B60N 2/58, B60R 21/207

(54) **SEAT BACK STRUCTURE AND MANUFACTURING METHOD THEREOF**
SITZLEHNENSTRUKTUR UND HERSTELLUNGSVERFAHREN DAFÜR
STRUCTURE DE DOSSIER DE SIÈGE ET PROCÉDÉ DE FABRICATION DE CELLE-CI

(30) Priority: 07.08.2018 CN 201810893344
(43) Date of publication of application: 06.01.2021
(73) Proprietor: Fuzhou Lianhong Motor Parts Co., Ltd., Fuzhou, Fujian 350119 (CN)
(72) Inventor: DENG, Jixiong, Fuzhou, Fujian 350119 (CN)
(74) Representative: Petculescu, Ana-Maria
(86) International application number: PCT/CN2019/071665
(87) International publication number: WO 2020/029544

(56) References cited:
- EP-A1- 0 768 216
- EP-A1- 2 711 250
- EP-A2- 0 788 940
- WO-A1-2011/152530
- CN-A- 109 050 362
- CN-U- 201 980 179
- CN-U- 201 998 937
- CN-U- 201 998 937
- CN-U- 201 998 937
- CN-U- 203 228 737
- CN-U- 206 826 455
- CN-U- 207 059 833
- DE-A1-102017 010 794
- JP-A- 2007 045 262

## Description

### Field of the Invention

The invention relates to a manufacturing method of a seat back structure.

### Background of the Invention

With the gradual popularization of cars and ever higher requirements of car buyers, people are paying more attention to the safety, comfort and technological contents of cars, in addition to the price. Consumers generally consider the comfort of cars as an important evaluation criterion when buying cars, and the comfort of car seats has the most direct influence on the riding comfort of the cars.

### Summary of the Invention

Drivers need to make a sharp turn in the driving process especially in a mountainous area where there are many curves. In this case, the driver and front passengers may feel uncomfortable due to the centrifugal effect, the driving safety is reduced, the driver may feel tired, the passengers may suffer from motion sickness and chest tightness. EP-A-2711250 discloses a manufacturing method of a seat back structure comprising attachment means for an air bag.

In view of this, the objective of the invention is to provide a manufacturing method of the seat back structure.

The invention is implemented through the following solution:: a manufacturing method of a seat back structure comprising:
a seat back sponge and a seat back iron support disposed in the seat back sponge, wherein lateral connecting plates are arranged on two sides of the seat back iron support, support borders for supporting two sides of the seat back sponge are disposed on the lateral connecting plates on the two sides respectively, and fixing plates for fixing an airbag are also disposed on the lateral connecting plates;
a plurality of S-shaped springs are horizontally disposed on the seat back iron support at intervals from bottom to top, the two ends of each S-shaped spring are connected to the two sides of the seat back iron support, and the airbag is disposed in an anti-explosion cloth cover; and
a U-shaped upper tube frame is arranged on an upper portion of the seat back iron support, a pair of headrest tubes for fixing a headrest is welded to the upper end of the upper tube frame, and a plurality of rear borders are horizontally welded to the upper tube frame; and a lower metal plate is disposed on a lower portion of the seat back iron support, and the seat back sponge is covered with a surface assembly;
the manufacturing method comprising the following steps: (1) mounting the seat back iron support on a cladding jig, and disposing the seat back sponge around the seat back iron support; (2) disposing the surface assembly at the upper end of the seat back sponge to cover the seat back sponge, and fixing the surface assembly to sponge positioning holes in the front side of the seat back sponge; (3) enabling the anti-explosion cloth cover to penetrate through the seat back sponge, disposing the airbag in the anti-explosion cloth cover, and fixing airbag fixing bolts to the fixing plates, and locking the airbag fixing bolts with safety nuts; (4) inserting an airbag wire harness into an airbag detection mechanism, reading a bar code on the airbag by a code reader, tearing the bar code from the airbag and attaching it to the rear side of the surface assembly, taking a torque wrench out of the airbag detection mechanism to detect the torque of the safety nuts, and then pulling out the airbag wire harness.

In this embodiment, the cladding jig comprises a support platform, wherein rotating blocks are disposed on two sides of the support platform, a positioning plate is disposed above the rotating blocks on the two sides, the two ends of the positioning plate are rotatably mounted on the rotating blocks and are able to swing forwards and backwards, a positioning block A for fixing the lateral connecting plate on one side of the seat back iron support is disposed at one end of the positioning plate and is provided with a pair of positioning pins A matched with positioning holes in the lateral connecting plate, a positioning block B is disposed at the other end of the positioning plate and is provided with a positioning pin B matched with one positioning hole in the lateral connecting plate on the other side of the seat back iron support, a positioning pin C matched with the other positioning hole in the lateral connecting plate on this side is arranged beside the positioning plate B and is mounted at the end of a telescopic rod of a jack cylinder, the positioning plate is further provided with a pair of positioning blocks D for positioning the lower metal plate of the seat back iron support, and a positioning block E for limiting the seat back sponge is disposed on the support platform.

Compared with the prior art (see EP-A-2711250) the invention has the following beneficial effects: the support borders additionally arranged on the seat back iron support improve the lateral support capacity and wrapping performance of a seat back and also improve the safety and comfort of the seat back, and the work efficiency and economic performance are effectively improved by carrying out cladding on the cladding jig. To make the purposes, technical solutions and advantages of the invention clearer, the invention is further expounded below with reference to specific embodiments and relevant accompanying drawings.

### Brief Description of the Drawings

FIG. 1 is a structural diagram of a seat back iron support in an embodiment of the invention (not claimed);
FIG. 2 is a structural diagram of a seat back sponge in the embodiment of the invention (not claimed);
FIG. 3 is a connection exploded view of an airbag and a fixing plate in the embodiment of the invention (not claimed);
FIG. 4 is perspective view of a cladding jig in the embodiment of the invention;
FIG. 5 is a front view of the cladding jig in the embodiment of the invention;
FIG. 6 is a schematic diagram of Step (2) of a manufacturing method in the embodiment of the invention;
FIG. 7 is a front view of a seat back assembly mounted on the cladding jig in the embodiment of the invention;
FIG. 8 is a perspective view of the seat back assembly mounted on the cladding jig in the embodiment of the invention;

Reference signs: 100, seat back sponge; 110, sponge positioning hole; 200, seat back iron support; 210, lateral connecting plate; 211, support border; 212, fixing plate; 220, S-shaped spring; 230, upper tube frame; 231, headrest tube; 232, rear border; 300, airbag; 310, anti-explosion cloth cover; 320, safety nut; 400, cladding jig; 410, support platform; 420, rotating block; 430, positioning plate; 431, positioning block A; 432, positioning block B; 433, positioning pin C; 434, jack cylinder; 435, positioning block D; 440, positioning block E; 500, surface assembly.

### Detailed Description of the Invention

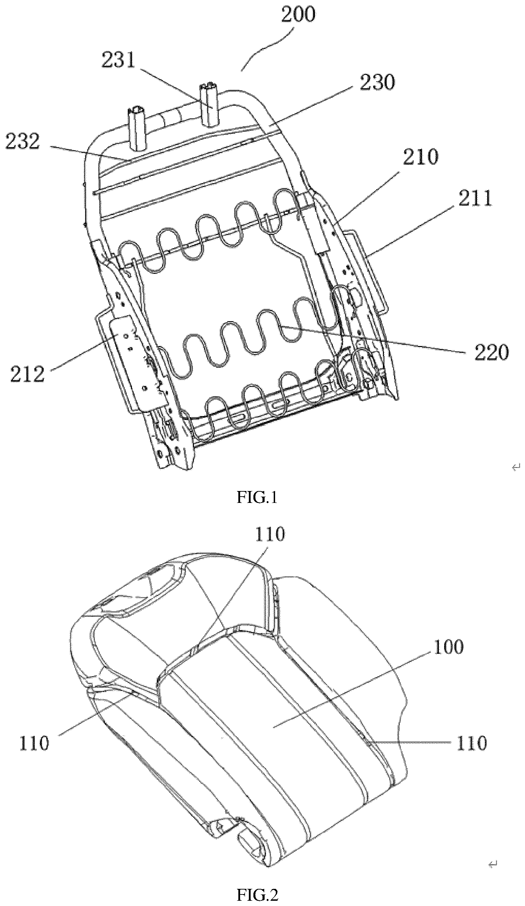

As shown in FIG. 1-FIG. 3, a seat back structure (not part of the present invention) comprises a seat back sponge 100 and a seat back iron support 200 disposed in the seat back sponge, wherein lateral connecting plates 210 are arranged on two sides of the seat back iron support 200, support borders 211 for supporting two sides of the seat back sponge 100 are disposed on the lateral connecting plates 201 on the two sides respectively, and fixing plates 212 for fixing an airbag 300 are also disposed on the lateral connecting plates 210. The support borders additionally arranged on the seat back iron support improve the lateral support capacity and wrapping performance of a seat back, and the seat back sponge is ergonomically shaped, so that the safety and comfort of the seat back are improved.

In this embodiment (not part of the present invention), a plurality of S-shaped springs 220 are horizontally disposed on the seat back iron support 200 at intervals from bottom to top, and the two ends of each S-shaped spring are connected to the two sides of the seat back iron support, so that the comfort of a seat is improved; and the airbag 300 is sleeved with an anti-explosion cloth cover 310.

In this embodiment (not part of the present invention), a U-shaped upper tube frame 230 is disposed on an upper portion of the seat back iron support 200, a pair of headrest tubes 231 for fixing a headrest is welded to the upper end of the upper tube frame 230, and a plurality of rear borders 232 for supporting the rear side of the seat back sponge are horizontally welded to the upper tube frame; and a lower metal plate is disposed on a lower portion of the seat back iron support, the seat back sponge is covered with a surface assembly 500, and the seat back sponge 100, the seat back iron support 200 and the surface assembly 500 form a seat back assembly,

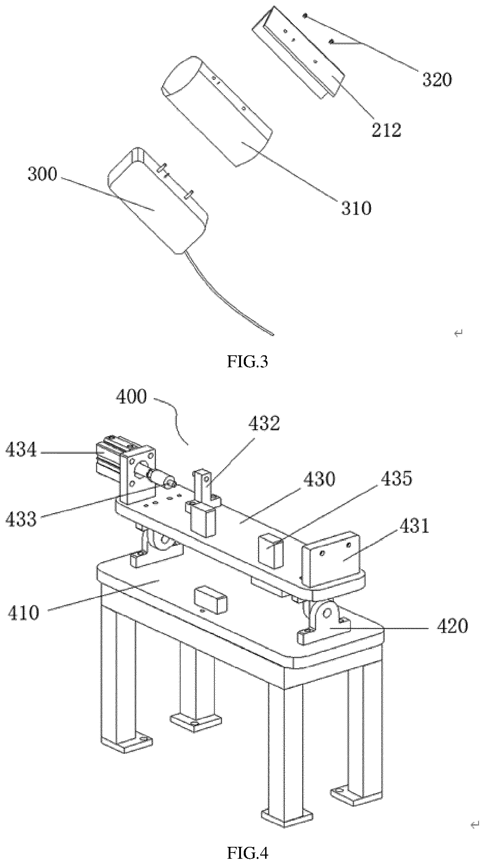

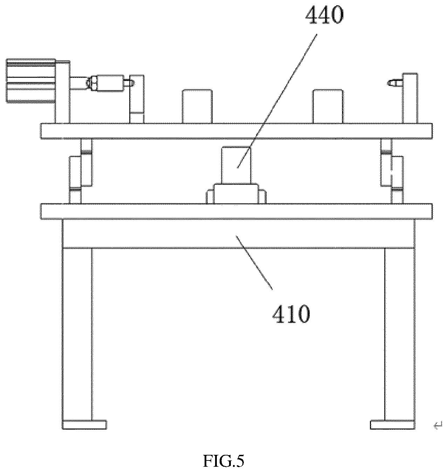

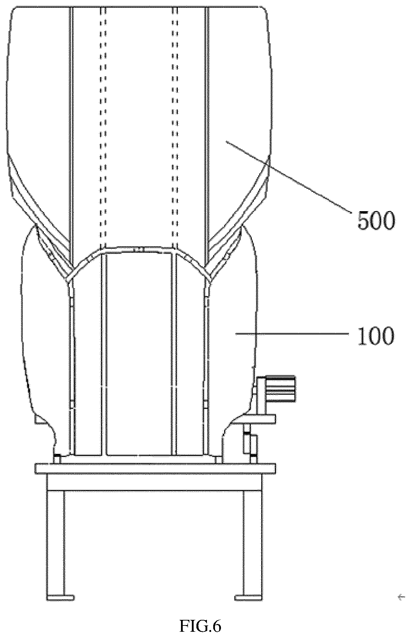

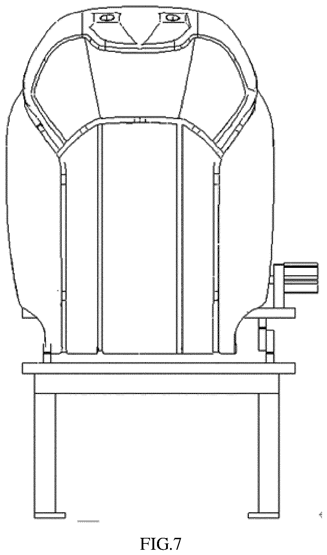

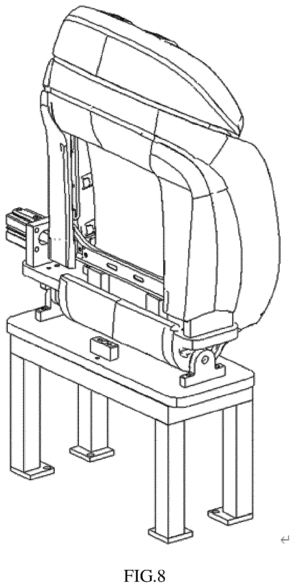

As shown in FIG. 4-FIG. 8, a manufacturing method of the seat back structure comprises the following steps: (1) the seat back iron support 200 is mounted on a cladding jig 400, and the seat back sponge 100 is disposed around the seat back iron support 200; (2) the surface assembly 500 is disposed at the upper end of the seat back sponge, is operated to cover the seat back sponge and is fixed to sponge positioning holes 110 in the front side of the seat back sponge, wherein the sponge positioning holes 110 are formed in the middle and two sides of an upper portion and two sides of a lower portion of the seat back sponge; (3) the anti-explosion cloth cover 310 penetrates through the seat back sponge 100, the airbag 300 is disposed in the anti-explosion cloth cover 310, and airbag fixing bolts are fixed to the fixing plates 212 and are locked with safety nuts 320; and (4) an airbag wire harness is inserted into an airbag detection mechanism, and a bar code on the airbag is read by a code reader and is torn from the airbag to be attached to the rear side of the surface assembly, a torque wrench is taken out of the airbag detection mechanism to detect the torque of the safety nuts to ensure that torque of the safety nuts is controlled within 80-100kgf.cm, and then the airbag wire harness is pulled out.

According to the invention, the support borders make the manufacturing process harder to a certain extent, but the cladding process is improved by carrying out cladding on the cladding jig, so that the work efficiency and economic performance are effectively improved.

In this embodiment, the cladding jig 400 comprises a support platform 410, wherein rotating blocks 420 are disposed on two sides of the support platform 410, a positioning plate 430 is disposed above the rotating blocks on the two sides, the two ends of the positioning plate 430 are rotatably mounted on the rotating blocks and are able to swing forwards and backwards, a positioning block A431 for fixing the lateral connecting plate on one side of the seat back iron support is disposed at one end of the positioning plate 430 and is provided with a pair of positioning pins A matched with positioning holes in the lateral connecting plate, a positioning block B 432 is disposed at the other end of the positioning plate and is provided with a positioning pin B matched with one positioning hole in the lateral connecting plate on the other side of the seat back iron support, a positioning pin C433 matched with the other positioning hole in the lateral connecting plate on the other side of the seat back iron support, a positioning pin C433 matched with the other positioning hole in the lateral connecting plate is disposed beside the positioning plate B, the positioning pin C is mounted at the end of a telescopic rod of a jack cylinder 434, the positioning plate 430 is provided with a pair of positioning blocks D435 for positioning the lower metal plate of the seat back iron support, and a positioning block E for limiting the seat back sponge is disposed on the support platform.

The seat back assembly is disposed on the cladding jig, the two lateral connecting plates are respectively fixed on the positioning block A and the positioning block B, the jack cylinder is operated to stretch out to fix the lateral connecting plates with the positioning pins C from the outside; in Step (2), the surface assembly 500 is disposed at the upper end of the seat back sponge and is fixed to the sponge positioning hole in the middle of the upper portion of the seat back sponge, then the seat back assembly is inclined backwards to fix the surface assembly on the sponge positioning holes in the two sides of the upper portion of the seat back sponge to completely cover the chair back assembly, and the lower end of the surface assembly is fixed to the sponge positioning holes in the two sides of the lower portion of the seat back sponge. Then, the jack cylinder is operated to retreat, and the seat back assembly is taken out to be turned, is then sealed and is finally placed back.

## Claims

1. A manufacturing method of a seat back structure, wherein the seat back structure comprises a seat back sponge (100) and a seat back iron support (200) disposed in the seat back sponge (100), wherein lateral connecting plates (210) are disposed on two sides of the seat back iron support (200), support borders (211) for supporting two sides of the seat back sponge (100) are disposed on the lateral connecting plates (210) on the two sides respectively, and fixing plates (212) for fixing an airbag (300) are also disposed on the lateral connecting plates (210), a plurality of S-shaped springs (220) are horizontally disposed on the seat back iron support (200) at intervals from bottom to top, two ends of each said S-shaped spring (220) are connected to the two sides of the seat back iron support (200), and the airbag (300) is disposed in an anti-explosion cloth cover (310), a U-shaped upper tube frame (230) is disposed on an upper portion of the seat back iron support (200), a pair of headrest tubes (231) for fixing a headrest is welded to an upper end of the upper tube frame (230), and a plurality of rear borders (232) are horizontally welded to the upper tube frame (230); and a lower metal plate is disposed on a lower portion of the seat back iron support (200), and the seat back sponge (100) is covered with a surface assembly (500), the method comprising the following steps: (1) mounting the seat back iron support (200) on a cladding jig (400), and disposing the seat back sponge (100) around the chair back iron support (200); (2) disposing the surface assembly (500) at an upper end of the seat back sponge (100) to cover the seat back sponge (100), and fixing the surface assembly (500) to sponge positioning holes (110) in a front side of the seat back sponge (100); (3) enabling the anti-explosion cloth cover (310) to penetrate through the seat back sponge (100), disposing the airbag (300) in the anti-explosion cloth cover (310), and fixing airbag fixing bolts to the fixing plates (212), and locking the airbag fixing bolts with safety nuts (320); (4) inserting an airbag wire harness into an airbag detection mechanism, reading a bar code on the airbag by a code reader, tearing the bar code from the airbag and attaching it to a rear side of the surface assembly, taking a torque wrench out of the airbag detection mechanism to detect the torque of the safety nuts, and then pulling out the airbag wire harness.

2. The manufacturing method of the seat back structure according to Claim 1, wherein the cladding jig (400) comprises a support platform (410), rotating blocks (420) are disposed on two sides of the support platform (410), a positioning plate (430) is disposed above the rotating blocks (420) on the two sides, two ends of the positioning plate (430) are rotatably mounted on the rotating blocks (420) and are able to swing forwards and backwards, a positioning block A (431) for fixing the lateral connecting plate on one side of the seat back iron support (200) is disposed at one end of the positioning plate (430) and is provided with a pair of positioning pins A matched with positioning holes in the lateral connecting plate, a positioning block B (432) is disposed at the other end of the positioning plate (430) and is provided with a positioning pin B matched with one positioning hole in the lateral connecting plate on the other side of the seat back iron support (200), a positioning pin C (433) matched with another positioning hole in the lateral connecting plate on this side is disposed beside the positioning plate B (432) and is mounted at an end of a telescopic rod of a jack cylinder (434), the positioning plate (430) is further provided with a pair of positioning blocks D (435) for positioning the lower metal plate of the seat back iron support (200), and a positioning block E for limiting the seat back sponge (100) is disposed on the support platform (410).

## Patentansprüche

1. Verfahren zur Herstellung einer Rückenlehnenstruktur, wobei die Rückenlehnenstruktur einen Rückenlehnenschwamm (100) und eine in dem Rückenlehnenschwamm (100) angeordnete Sitzlehnenbügelhalterung (200) umfasst, wobei seitliche Verbindungsplatten (210) an zwei Seiten der Sitzlehnenbügelhalterung (200) angeordnet sind, Stützränder (211) zum Stützen von zwei Seiten des Rückenlehnenschwamms (100) jeweils an den seitlichen Verbindungsplatten (210) an den beiden Seiten angeordnet sind, und Befestigungsplatten (212) zum Befestigen eines Airbags (300) ebenfalls an den seitlichen Verbindungsplatten (210) angeordnet sind, eine Vielzahl von S-förmigen Federn (220) horizontal auf der Sitzlehnenbügelhalterung (200) in Abständen von unten nach oben angeordnet, zwei Enden jeder der S-förmigen Federn (220) mit den beiden Seiten der Sitzlehnenbügelhalterung (200) verbunden sind, und der Airbag (300) in einer explosionssicheren Stoffhülle (310) angeordnet, ein U-förmiger oberer Rohrrahmen (230) an einem oberen Abschnitt der Sitzlehnenbügelhalterung (200) angeordnet ist, ein Paar von Kopfstützenrohren (231) zum Befestigen einer Kopfstütze an ein oberes Ende des oberen Rohrrahmens (230) geschweißt ist, und eine Mehrzahl von hinteren Rändern (232) horizontal an den oberen Rohrrahmen (230) geschweißt ist; und eine untere Metallplatte an einem unteren Abschnitt der Sitzlehnenbügelhalterung (200) angeordnet ist, und der Rückenlehnenschwamm (100) mit einer Oberflächenanordnung (500) bedeckt ist, wobei das Verfahren die folgenden Schritte umfasst: (1) Anbringen der Sitzlehnenbügelhalterung (200) auf einer Verkleidungsvorrichtung (400) und Anordnen des Rückenlehnenschwamms (100) um die Sitzlehnenbügelhalterung (200) herum; (2) Anordnen der Oberflächenanordnung (500) an einem oberen Ende des Rückenlehnenschwamms (100), um den Rückenlehnenschwamm (100) abzudecken, und Befestigen der Oberflächenanordnung (500) an Schwammpositionierungslöchern (110) in einer Vorderseite des Rückenlehnenschwamms (100); (3) Ermöglichen, dass die explosionssichere Stoffabdeckung (310) durch den Rückenlehnenschwamm (100) hindurchgeht, Anordnen des Airbags (300) in der explosionssicheren Stoffabdeckung (310) und Befestigen von Airbag-Befestigungsbolzen an den Befestigungsplatten (212) und Sichern der Airbag-Befestigungsbolzen mit Sicherheitsmuttern (320); (4) Einführen eines Airbag-Kabelbaums in einen Airbag-Erfassungsmechanismus, Lesen eines Strichcodes auf dem Airbag durch einen Codeleser, Abreißen des Strichcodes von dem Airbag und Anbringen desselben an einer Rückseite der Oberflächenanordnung, Herausnehmen eines Drehmomentschlüssels aus dem Airbag-Erfassungsmechanismus, um das Drehmoment der Sicherheitsmuttern zu erfassen, und dann Herausziehen des Airbag-Kabelbaums.

2. Verfahren zur Herstellung der Rückenlehnenstruktur nach Anspruch 1, wobei die Verkleidungsvorrichtung (400) eine Auflageplattform (410) umfasst, Drehblöcke (420) an zwei Seiten der Auflageplattform (410) angeordnet sind, eine Positionierplatte (430) oberhalb der Drehblöcke (420) an den beiden Seiten angeordnet ist, zwei Enden der Positionierungsplatte (430) drehbar an den Drehblöcken (420) angebracht sind und vorwärts und rückwärts schwingen können, ein Positionierungsblock A (431) zum Befestigen der seitlichen Verbindungsplatte auf einer Seite der Sitzlehnenbügelhalterung (200) an einem Ende der Positionierungsplatte (430) angeordnet ist und mit einem Paar von Positionierungsstiften A versehen ist, die mit Positionierungslöchern in der seitlichen Verbindungsplatte zusammenpassen, ein Positionierungsblock B (432) am anderen Ende der Positionierungsplatte (430) angeordnet ist und mit einem Positionierungsstift B versehen ist, der mit einem Positionierungsloch in der seitlichen Verbindungsplatte auf der anderen Seite der Sitzlehnenbügelhalterung (200) zusammenpasst, ein Positionierungsstift C (433), der mit einem anderen Positionierungsloch in der seitlichen Verbindungsplatte auf dieser Seite zusammenpasst, neben der Positionierungsplatte B (432) angeordnet ist und an einem Ende einer Teleskopstange eines Hebezylinders (434) angebracht ist, die Positionierungsplatte (430) ferner mit einem Paar von Positionierungsblöcken D (435) zum Positionieren der unteren Metallplatte der Sitzlehnenbügelhalterung (200) versehen ist, und ein Positionierungsblock E zum Begrenzen des Rückenlehnenschwamms (100) auf der Stützplattform (410) angeordnet ist.

## Revendications

1. Un procédé de fabrication d'une structure de dossier de siège, dans lequel la structure de dossier de siège comprend une éponge de dossier de siège (100) et un support de dossier de siège en acier (200) disposé dans l'éponge de dossier de siège (100), dans lequel des plaques de connexion latérales (210) sont disposées sur les deux côtés du support de dossier de siège en acier (200), des bordures de support (211) soutenant les deux côtés de l'éponge de dossier de siège (100) sont agencées sur les plaques de connexion latérales (210) sur les deux côtés respectivement, et des plaques de fixation (212) pour fixer un airbag (300) sont également agencées sur les plaques de connexion latérales (210), une pluralité de ressorts en forme de S (220) est agencée horizontalement sur le support de dossier de siège en acier (200) à intervalles depuis le bas jusqu'au haut, deux extrémités desdits ressorts en forme de S (220) sont connectées aux deux côtés du support de dossier de siège en acier (200), et l'airbag (300) est agencé dans une couverture en tissu anti-explosion (310), un cadre de tube supérieur en forme de U (230) est agencé à la portion supérieure du support de dossier de siège en acier (200), une paire de tubes de repose-tête (231) pour fixer un repose-tête est soudée à l'extrémité supérieure du cadre de tube supérieur en forme de U (230), et une pluralité de bordures arrières (232) est soudée horizontalement au cadre de tube supérieur en forme de U (230) ; et une plaque de métal inférieure est agencée sur la portion inférieure du support de dossier de siège en acier (200), et l'éponge de dossier de siège (100) est couverte par un ensemble de surface (500), le procédé comprenant les étapes suivantes : (1) monter le support de dossier de siège en acier (200) sur un gabarit de revêtement (400), et agencer l'éponge de dossier de siège (100) autour du support de dossier de siège en acier (200) ; (2) agencer l'ensemble de surface (500) à une extrémité supérieure de l'éponge de dossier de siège (100) pour couvrir l'éponge de dossier de siège (100), et fixer l'ensemble de surface (500) sur les trous de positionnement de l'éponge (110) sur le côté avant de l'éponge de dossier de siège (100) ; (3) permettre à la couverture en tissu anti-explosion (310) de pénétrer à travers l'éponge de dossier de siège (100), agencer l'airbag (300) la couverture en tissu anti-explosion (310), et fixer les boulons de fixation de l'airbag aux plaques de fixation (212), et verrouiller les boulons de fixation de l'airbag avec des écrous de sécurité (320) ; (4) insérer un faisceau de câbles d'airbag dans le mécanisme de détection de l'airbag, lire un code-barres sur l'airbag par un lecteur de code, déchirer le code-barres de l'airbag et l'attacher sur la face arrière de l'ensemble de surface, sortir une clé dynamométrique du mécanisme de détection de l'airbag afin de détecter le couple de serrage des écrous de sécurité, puis sortir le faisceau de câble de l'airbag.

2. Un procédé de fabrication d'une structure de dossier de siège selon la revendication 1, dans lequel le gabarit de revêtement (400) comprend une plateforme de support (410), des blocs rotatifs (420) sont agencés sur les deux côtés de la plateforme de support (410), une plaque de positionnement (430) est agencée au-dessus des blocs rotatifs (420) sur les deux côtés, les deux extrémités de la plaque de positionnement (430) sont montées de façon rotative sur les blocs rotatifs (420) et sont capables de se balancer vers l'avant et l'arrière, un bloc de positionnement A (431) pour fixer les plaques de connexion latérales sur un côté du support de dossier de siège en acier (200) est agencé à une extrémité de la plaque de positionnement (430) et est muni d'une paire de broches de positionnement A correspondant aux trous de positionnement sur la plaque de connexion latérale, un bloc de positionnement B (432) est agencé à l'autre extrémité de la plaque de positionnement (430) et est muni d'une broche de positionnement B correspondant à un trou de positionnement dans la plaque de connexion latérale sur l'autre côté du support de dossier de siège en acier (200), une broche de positionnement C (433) correspondant à un autre trou de positionnement dans la plaque de connexion latérale sur cette face est agencée à côté de la plaque de positionnement B (432) et est montée à une extrémité de la barre télescopique d'un vérin (434), la plaque de positionnement (430) est en outre munie d'une paire de blocs de positionnement D (435) pour positionner la plaque de métal inférieure du support de dossier de siège en acier (200), et un bloc de positionnement E pour limiter l'éponge de dossier de siège (100) est agencé sur la plateforme de support (410).
